# DEMANDE DE BREVET EUROPEEN

(11) **EP 2 527 234 A2**
(43) Date de publication de la demande: **28.11.2012**
(21) Numéro de dépôt: 12305253.2
(22) Date de dépôt: 02.03.2012
(51) Int. Cl.: B62D 29/04

(54) **Agencement de fixation d'un élément de carrosserie sur un élément de structure de caisse**

(30) Priorité: 25.05.2011 FR 1154548
(71) Demandeur: Renault S.A.S., 92100 Boulogne-Billancourt (FR)
(72) Inventeur: Vollet, Raphael, 91340 OLLAINVILLE (FR)

(57) **Abrégé**

Agencement (10) de fixation d'un élément de carrosserie (1) d'un véhicule automobile, notamment un bouclier, sur un élément de structure de caisse (2), l'agencement comprenant une vis (3) introduite dans un trou taraudé (9) de l'élément de structure de caisse (2), l'élément de structure de caisse (2) comprenant :
- une première surface (21) contre laquelle l'élément de carrosserie (1) est destiné à venir en contact,
- un bossage (5) destiné à venir se loger dans un premier trou (8) de l'élément de carrosserie (1)

la vis comprenant une tête (4) venant en contact contre un sommet du bossage (5),
la hauteur (H) du bossage étant supérieure à l'épaisseur (e) de l'élément de carrosserie au niveau du premier trou (8),
le bossage (5) comprenant une deuxième surface (6) sensiblement plane, inclinée relativement à la première surface (21),
l'élément de carrosserie (1) comprenant un bord (30) conformé pour être déplacé parallèlement à la première surface (21) jusqu'à ce qu'il arrive en contact contre la seconde surface (6) inclinée, cette dernière induisant une action sur le bord (30) ainsi qu'une déformation élastique en flexion de l'élément de carrosserie (1) jusqu'à ce que le bossage (5) et le premier trou (8) se trouvent en vis-à-vis, ledit élément de carrosserie (1) retrouvant sa forme initiale lorsque le bossage (5) pénètre dans le premier trou (8).

## Description

La présente invention concerne un agencement de fixation d'un élément de structure de caisse d'un véhicule automobile coopérant avec un élément de carrosserie. L'invention concerne encore un procédé d'assemblage d'un tel élément de carrosserie sur un tel élément de structure de caisse. L'invention concerne enfin un véhicule automobile comprenant un tel agencement de fixation.

Il est connu d'assembler un élément de carrosserie sur un élément de structure de caisse d'un véhicule automobile au moyen d'un système de fixation. Ces assemblages peuvent être soumis, en fonction de leur destination et de leur environnement, à des contraintes diverses et variées.

La source de ces contraintes peut être notamment de nature thermique et engendrer des phénomènes de dilatation et de retrait auxquels il est souvent souhaitable de remédier, pour éviter des déformations intempestives, notamment de type fluage, qui peuvent s'avérer nuisibles à la tenue des assemblages voire même dénaturer un aspect d'ensemble lorsqu'une certaine esthétique est recherchée. Concrètement, ce problème se pose dans l'industrie automobile au niveau de la fixation d'un bouclier sur un élément d'absorption de choc dit « absorbeur de choc », par exemple.

En effet, dans une telle situation, si on fixe rigidement le bouclier à des absorbeurs de choc, par exemple à l'aide de vis maintenant le bouclier en appui sur les absorbeurs de choc par serrage et si on expose le bouclier à la chaleur et notamment au rayonnement solaire, il se produit des dilatations dans le bouclier et ces dilatations ne sont pas permises par les moyens de fixation. En conséquence, il s'ensuit que le bouclier se déforme et que ces déformations modifient sensiblement son aspect esthétique. Ce problème se pose de façon encore plus sensible lorsque l'élément de carrosserie ou bouclier est en matière plastique et que les pièces en présence au niveau de l'agencement de fixation n'ont pas les mêmes coefficients de dilatation. Cet effet peut être atténué en choisissant un matériau à faible coefficient de dilatation pour réaliser le bouclier. Cependant, ceci n'est pas toujours possible, notamment du fait de contraintes économiques.

Pour fixer une aile de carrosserie d'un véhicule automobile sur un châssis, on connaît du document FR 2756599 un système de fixation comprenant un moyen de fixation destiné à être monté au travers d'un trou percé dans le châssis et d'une lumière percée dans l'aile. Le système comprend un élément intermédiaire ayant globalement la forme d'un T avec une première partie destinée à s'étendre parallèlement à l'aile et une seconde partie destinée à s'engager librement dans la lumière de l'aile jusqu'à venir en contact avec le châssis avant de fixer l'élément intermédiaire à l'aile par un moyen de fixation. La seconde partie de l'élément intermédiaire s'étend sur une longueur supérieure à l'épaisseur de l'aile. Ainsi, la première partie de l'élément intermédiaire est située à distance du châssis pour définir un jeu permettant au châssis et à l'aile de pouvoir glisser l'un par rapport à l'autre suivant au moins une direction définie par la lumière réalisée dans l'aile.

Un tel système complique l'assemblage car il nécessite de fournir une pièce intermédiaire et de la mettre en place dans l'assemblage. Par ailleurs, ceci est générateur de coûts, notamment de coûts logistiques de gestion de références, mais également de coûts de production de cette pièce intermédiaire.

Le but de l'invention est de fournir un élément de structure de caisse permettant de remédier aux inconvénients identifiés précédemment et permettant d'améliorer les éléments de structure de caisse connus de l'art antérieur. En particulier, l'invention propose un élément de structure de caisse simple, peu coûteux et permettant de résoudre le problème de dilatation thermique d'un bouclier de véhicule automobile sans pour autant augmenter les coûts de production et d'assemblage.

A cet effet, l'invention a pour objet un agencement de fixation d'un élément de carrosserie d'un véhicule automobile, notamment un bouclier, sur un élément de structure de caisse, notamment un absorbeur de choc, l'agencement comprenant une vis introduite dans un trou lisse ou taraudé de l'élément de structure de caisse, l'élément de structure de caisse comprenant :
- une première surface contre laquelle l'élément de carrosserie est destiné à venir en contact,
- un bossage destiné à venir se loger dans un premier trou de l'élément de carrosserie
la vis comprenant une tête présentant une surface sous tête venant en contact contre un sommet du bossage,
la hauteur du bossage étant supérieure à l'épaisseur de l'élément de carrosserie au niveau du premier trou,
le bossage comprenant une deuxième surface sensiblement plane, inclinée relativement à la première surface,
l'élément de carrosserie comprenant un bord conformé pour être déplacé parallèlement à la première surface jusqu'à ce qu'il arrive en contact contre la seconde surface inclinée, cette dernière induisant une action sur le bord ainsi qu'une déformation élastique en flexion de l'élément de carrosserie jusqu'à ce que le bossage et le premier trou se trouvent en vis-à-vis, ledit élément de carrosserie retrouvant sa forme initiale lorsque le bossage pénètre dans le premier trou.

Ainsi le bossage agit à la façon d'une entretoise entre l'élément de structure de caisse et la surface sous tête de la vis. Cette entretoise empêche un serrage excessif de l'élément de carrosserie, pris en étau entre l'élément de structure de caisse et la tête de la vis. L'absence de contrainte excessive exercée sur l'élément de carrosserie empêche la déformation de ce dernier, en dépit d'une dilatation particulière de l'élément de carrosserie sous l'effet de la chaleur.

Selon d'autres caractéristiques avantageuses de l'invention :
- la deuxième surface est inclinée en présentant un angle compris entre 30° et 50° relativement à la première surface,
- la différence entre la hauteur du bossage et l'épaisseur de l'élément de carrosserie au niveau du premier trou est comprise entre 0,1 mm et 0,3 mm, notamment est de l'ordre de 0,2 mm,
- le bossage et le trou lisse ou taraudé destiné à recevoir la vis s'étendent selon un même axe sensiblement perpendiculaire à la première surface,
- le bossage a une forme cylindrique de révolution ou a sensiblement une forme cylindrique de révolution,
- le premier trou présente un lamage,
- l'élément de carrosserie est en matière plastique.

L'invention a également pour objet un procédé d'assemblage d'un élément de carrosserie sur un élément de structure de caisse suivant un agencement ayant tout ou partie des caractéristiques précédentes, le procédé comprenant les étapes suivantes :
- fourniture de l'élément de structure de caisse,
- fourniture de l'élément de carrosserie,
- mise en place de l'élément de carrosserie sur l'élément de structure de caisse,
- mise en place et vissage d'une vis de fixation dans un trou lisse ou taraudé de l'élément de structure de caisse jusqu'à ce qu'une surface sous tête de la vis vienne en contact contre un sommet du bossage.

L'invention a encore pour objet un véhicule automobile comprenant un agencement ayant tout ou partie des caractéristiques précédentes.

Les dessins annexés représentent, à titre d'exemple, un mode de réalisation d'un agencement de fixation selon l'invention d'un élément de carrosserie sur un élément de structure de caisse d'un véhicule, dans lesquels :
- la figure 1 est une vue en perspective d'un agencement de fixation selon l'invention,
- la figure 2 est une vue en coupe de cet agencement de fixation,
- la figure 3 est une vue en coupe partielle de cet agencement de fixation.

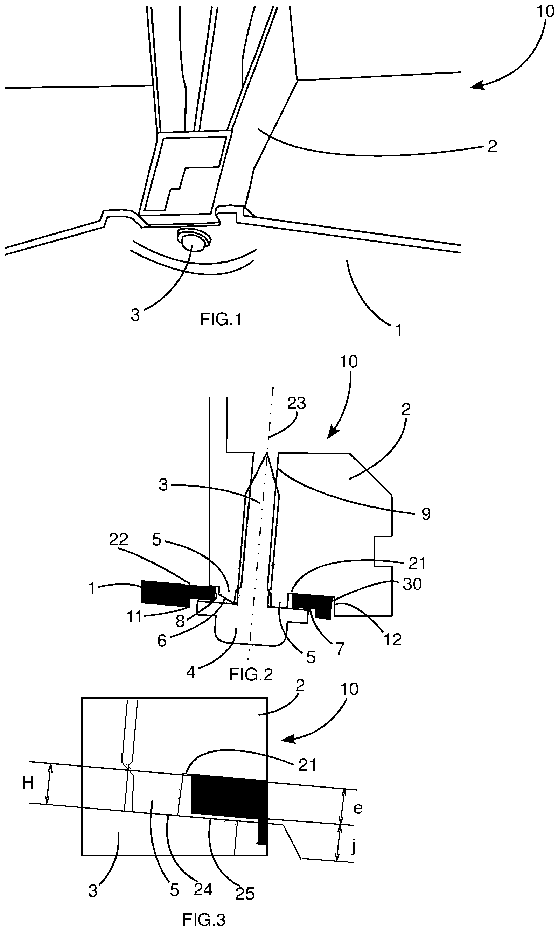

Un mode de réalisation d'un agencement 10 ou d'un assemblage de fixation d'un élément de carrosserie 1 à un élément 2 de structure de caisse d'un véhicule automobile est décrit ci-après en référence aux figures 1 à 3. L'agencement comprend l'élément de structure de caisse, l'élément de carrosserie et un élément 3 de fixation. L'élément de carrosserie est par exemple un bouclier, comme un bouclier avant ou arrière du véhicule automobile. Ce bouclier est typiquement en matière plastique. L'élément de structure de caisse est par exemple un absorbeur de choc ou toute autre pièce permettant de lier mécaniquement l'élément de carrosserie à la structure de caisse.

L'élément de structure de caisse comprend un premier élément de fixation 9, 5, 21 destiné à coopérer avec un deuxième élément de fixation 8, 22 prévu sur l'élément de carrosserie 1 pour fixer l'élément de carrosserie sur l'élément de structure de caisse. Ce premier élément de fixation comprend :
- une première surface 21 contre laquelle l'élément de carrosserie est destiné à venir porter,
- un bossage 5 destiné à venir se loger dans un premier trou 8 du deuxième élément de fixation, la hauteur H du bossage étant supérieure à l'épaisseur e de l'élément de carrosserie au niveau du premier trou, et
- un deuxième trou 9 pratiqué dans l'élément de structure de caisse, en particulier dans le bossage 5.

De préférence, le bossage s'étend selon un axe 23 perpendiculaire ou sensiblement perpendiculaire à la première surface 21. De même, le trou 9 s'étend selon l'axe 23 ou selon un autre axe parallèle ou sensiblement parallèle à l'axe 23.

Le bossage présente de préférence une deuxième surface 6 inclinée relativement à la première surface, notamment une surface plane ou sensiblement plane présentant un angle compris entre 30° et 50° relativement à la première surface. La fonction d'une telle surface est décrite plus bas.

Par ailleurs, le bossage a avantageusement une forme de révolution ou a sensiblement une forme de révolution, en particulier une forme cylindrique de révolution ou sensiblement une forme cylindrique de révolution.

L'élément de structure de caisse est par exemple réalisé en matière plastique. Le deuxième trou 9 est par exemple un trou lisse ou un trou taraudé. L'élément de structure de caisse présente avantageusement un épaulement 12 coopérant avec un bord 30 de l'élément de carrosserie pour limiter, dans au moins une direction, le déplacement de l'élément de carrosserie relativement à l'élément de structure lors de son montage. L'élément de carrosserie comprend un deuxième élément de fixation 8, 22. Le deuxième élément de fixation comprend un premier trou 8 et une troisième surface 22. La troisième surface est destinée à venir en contact avec la première surface 21. Le deuxième trou est destiné à recevoir le bossage 5. L'épaisseur e de l'élément de carrosserie au niveau du deuxième élément de fixation, c'est-à-dire au niveau du trou 8 est inférieure à la hauteur H du bossage. Par exemple, la différence j entre la hauteur du bossage et l'épaisseur de l'élément de carrosserie au niveau du premier trou est comprise entre 0,1 mm et 0,3 mm, notamment est de l'ordre de 0,2 mm.

Le troisième élément de fixation consiste par exemple en une vis 3, par exemple une vis autotaraudeuse. Ce troisième élément de fixation comprend une tête 4 présentant une surface sous tête 25. Lors de la mise en place de ce troisième élément de fixation sur l'élément de structure de caisse, la troisième surface 25 vient en contact contre un sommet du bossage. Ainsi, un espace de la hauteur H du bossage est ménagé entre les première et troisième surfaces.

Le premier trou peut présenter un lamage 11.

L'invention porte également sur un procédé d'assemblage de l'élément de carrosserie sur un élément de structure de caisse décrit précédemment. Le procédé comprend les étapes suivantes :
- fourniture de l'élément de structure de caisse,
- fourniture de l'élément de carrosserie,
- mise en place de l'élément de carrosserie sur l'élément de structure de caisse,
- mise en place du troisième élément 3 de fixation sur l'élément de structure de caisse 2 jusqu'à ce qu'une troisième surface 25 du troisième élément vienne en contact contre un sommet 24 du bossage.

Dans l'étape de mise en place de l'élément de carrosserie sur l'élément de structure de caisse, on applique une action mécanique sur l'élément de carrosserie relativement à l'élément de structure de caisse selon une direction parallèle ou sensiblement parallèle à la première surface. Cette action mécanique provoque un déplacement du bord 30 parallèlement à la première surface jusqu'à ce qu'il arrive contre la surface inclinée 6 du bossage. Lorsque l'action et le déplacement sont poursuivis, la surface inclinée induit une action sur le bord 30 et une déformation élastique en flexion de l'élément de carrosserie perpendiculairement ou sensiblement perpendiculairement à la première surface. Cette surface inclinée agit à la façon d'une rampe sur laquelle frotte le bord 30 de l'élément de carrosserie, qui en se déplaçant parallèlement à la première surface et simultanément écarté de l'élément de structure de caisse sous l'influence de la rampe. Dès que le bossage et le premier trou se trouvent en vis-à-vis, l'élément de carrosserie retrouve sa forme initiale, le bossage pénétrant dans le premier trou. L'assemblage s'apparente à un clipage de l'élément de carrosserie sur le bossage de l'élément de structure de caisse. Ainsi, le montage de l'élément de carrosserie sur l'élément de structure de caisse est facilité.

L'invention porte aussi sur un assemblage obtenu par la mise en oeuvre du procédé décrit précédemment.

Une fois l'élément de carrosserie et l'élément de structure de caisse assemblés, on remarque que, grâce au jeu j, l'élément de carrosserie n'est pas serré entre la première surface et la troisième surface et peut donc se déplacer parallèlement à la première surface. Ceci permet d'éviter que des contraintes mécaniques soient générées dans l'élément de carrosserie et que ces contraintes induisent des modifications d'aspect de l'élément de carrosserie. Afin d'assurer cette mobilité ou cette capacité de déplacement parallèlement à la première surface, la dimension intérieure du premier trou est supérieure à la dimension extérieure du bossage. Par exemple, la dimension intérieure, notamment le diamètre intérieur, du premier trou est supérieure de 1 mm à 3 mm, en particulier de 2 mm, à la dimension extérieure, notamment le diamètre extérieur, du bossage. Ces moyens permettent d'éviter le fluage de l'élément de carrosserie à moindre coût.

## Revendications

1. Agencement (10) de fixation d'un élément de carrosserie (1) d'un véhicule automobile, notamment un bouclier, sur un élément de structure de caisse (2), notamment un absorbeur de choc, l'agencement comprenant une vis (3) introduite dans un trou lisse ou taraudé (9) de l'élément de structure de caisse (2), l'élément de structure de caisse (2) comprenant :
- une première surface (21) contre laquelle l'élément de carrosserie (1) est destiné à venir en contact,
- un bossage (5) destiné à venir se loger dans un premier trou (8) de l'élément de carrosserie (1)
la vis comprenant une tête (4) présentant une surface sous tête (25) venant en contact contre un sommet du bossage (5),
la hauteur (H) du bossage étant supérieure à l'épaisseur (e) de l'élément de carrosserie au niveau du premier trou (8),
le bossage (5) comprenant une deuxième surface (6) sensiblement plane, inclinée relativement à la première surface (21),
l'élément de carrosserie (1) comprenant un bord (30) conformé pour être déplacé parallèlement à la première surface (21) jusqu'à ce qu'il arrive en contact contre la seconde surface (6) inclinée, cette dernière induisant une action sur le bord (30) ainsi qu'une déformation élastique en flexion de l'élément de carrosserie (1) jusqu'à ce que le bossage (5) et le premier trou (8) se trouvent en vis-à-vis, ledit élément de carrosserie (1) retrouvant sa forme initiale lorsque le bossage (5) pénètre dans le premier trou (8).

2. Agencement selon la revendication 1, **caractérisé en ce que** la deuxième surface (6) est inclinée en présentant un angle compris entre 30° et 50° relativement à la première surface (21).

3. Agencement (10) selon la revendication 1 ou 2, **caractérisé en ce que** la différence (j) entre la hauteur (H) du bossage et l'épaisseur (e) de l'élément de carrosserie (1) au niveau du premier trou (8) est comprise entre 0,1 mm et 0,3 mm, notamment est de l'ordre de 0,2 mm.

4. Agencement selon l'une des revendications précédentes, **caractérisé en ce que** le bossage (5) et le trou lisse ou taraudé (9) destiné à recevoir la vis (3) s'étendent selon un même axe (23) sensiblement perpendiculaire à la première surface (21).

5. Agencement selon l'une des revendications précédentes, **caractérisé en ce que** le bossage (5) a une forme cylindrique de révolution ou a sensiblement une forme cylindrique de révolution.

6. Agencement de fixation selon l'une des revendications précédentes, **caractérisé en ce que** le premier trou (8) présente un lamage (11).

7. Agencement de fixation selon l'une quelconque des revendications précédentes, **caractérisé en ce que** l'élément de carrosserie (1) est en matière plastique.

8. Procédé d'assemblage d'un élément de carrosserie (1) sur un élément de structure de caisse (2) suivant un agencement selon l'une des revendications précédentes, comprenant les étapes suivantes :
- fourniture de l'élément de structure de caisse (2),
- fourniture de l'élément de carrosserie (1),
- mise en place de l'élément de carrosserie (1) sur l'élément de structure de caisse (2),
- mise en place et vissage d'une vis de fixation (3) dans un trou lisse ou taraudé (9) de l'élément de structure de caisse (2) jusqu'à ce qu'une surface sous tête (25) de la vis vienne en contact contre un sommet (24) du bossage.

9. Véhicule automobile comprenant un agencement selon l'une quelconque des revendications 1 à 7.
